# EUROPÄISCHE PATENTANMELDUNG

(11) **EP 1 049 350 A1**
(43) Veröffentlichungstag der Anmeldung: **02.11.2000**
(21) Anmeldenummer: 00250136.9
(22) Anmeldetag: 28.04.2000
(51) Int. Cl.: H04Q 11/04

(54) **Verfahren und Kommunikationssystem zur Übertragung von Daten eines Teilnehmeranschlusses**

(30) Priorität: 30.04.1999 DE 19921084
(71) Anmelder: Teles AG Informationstechnologien, 10587 Berlin (DE)
(72) Erfinder: Schindler, Sigram, 14129 Berlin (DE); Bastian, Jan, 13437 Berlin (DE); Paetsch, Franl, 10961 Berlin (DE)
(74) Vertreter: Müller, Wolfram Hubertus, Dipl.-Phys.

(57) **Zusammenfassung**

Die Erfindung betrifft ein Verfahren und ein Kommunikationssystem zur Übertragung von Daten eines Teilnehmeranschlusses, an den mindestens ein Endgerät angeschlossen ist, zu mindestens einer Zieleinrichtung, wobei die Daten zunächst über ein erstes Kommunikationsnetz übertragen werden, an das der Teilnehmeranschluß angeschlossen ist, und von diesem an ein zweites Kommunikationsnetz weitergegeben werden, das mit dem ersten Telekommunikationsnetz zusammengeschaltet ist (Interconnection). Erfindungsgemäß werden die Daten der einzelnen Nutzkanäle des Teilnehmeranschlusses (1) teilnehmerseitig durch Multiplexen auf eine verringerte Anzahl von Nutzkanälen verteilt und die zu übertragenden Daten auf den verbleibenden Nutzkanälen über das erste Kommunikationsnetz (4) zu einem Interconnectpunkt (6) des zweiten Kommunikationsnetzes (3) übertragen. Bevorzugt erfolgt dabei auch eine Datenkompression. Am oder hinter dem Interconnectpunkt (6) wird dann durch Demultiplexen sowie Dekomprimieren die ursprüngliche Anzahl der Nutzkanäle wiederhergestellt. Die Erfindung ermöglicht es, die an den Betreiber des ersten Kommunikationsnetzes zu zahlenden Durchleitungs- und Anschlußgebühren zu minimieren.

## Beschreibung

Die Erfindung betrifft ein Verfahren zur Übertragung von Daten eines Teilnehmeranschlusses nach dem Oberbegriff des Anspruchs 1, ein Kommunikationsnetz nach dem Oberbegriff des Anspruchs 12 sowie eine Vorrichtung und eine Interconnecteinheit zur Durchführung des Verfahrens.

### Hintergrund der Erfindung

Mit der Liberalisierung des Telekommunikationsmarktes in Deutschland und anderen Ländern sind zu den ehemaligen Monopolisten zusätzliche Anbieter von Telekommunikationsdienstleistungen hinzugetreten. Diese verfügen in der Regel über ein eigenes sogenanntes Backbone-Netz, nicht jedoch über Datenleitungen hin zu den einzelnen Endteilnehmern. Um diese zu erreichen, ist ein Rückgriff auf das Netz des ehemaligen Monopolisten, in Deutschland die Deutsche Telekom AG, erforderlich (Überbrückung der "Last-Mile").

Für das Durchleiten der Daten zum Endteilnehmer über das eigene Netz und damit verbundene Zuführungs- und Terminierungsleistungen verlangt der ehemalige Monopolist Gebühren. Bei einer Zuführungsleistung wird eine Verbindung vom rufenden Anschluß zum Netzübergabepunkt des Netzes des alternativen Telekommunikationsanbieters geschaltet. Im Falle der Terminierung wird eine Verbindung vom Netzübergabepunkt zum angewählten Anschluß durch den Monopolisten hergestellt. Die Leistung besteht aus dem Aufbau eines Nutzkanals mit einer Übertragungsbandbreite von 64 Kbit/s zwischen Anschluß und Übergabepunkt und deren Aufrechterhaltung für die Dauer der Verbindung. Für jeden Nutzkanal ist dabei eine bestimmte Gebühr an den ehemaligen Monopolisten zu entrichten.

Die DE 197 23 091 A1 offenbart ein Verfahren zum Vermitteln zwischen Teilnehmern eines Telekommunikationsnetzes, bei dem Daten mehrerer Nutzkanäle auf einer Übertragungsstrekke, die von der Deutsche Telekom AG gemietet wird, gemultiplext und komprimiert werden. Eine Übertragung gemultiplexter und komprimierter Daten findet dabei ausschließlich zwischen vermittlungsstellen statt.

Die DE 196 10 009 A1 offenbart eine Einrichtung zur Komprimierung von Signalen und eine Einrichtung zur Dekomprimierung von Signalen, durch die zwei unabhängige diensteintegrierende digitale Netze beispielsweise über eine Funkstrekke miteinander verbunden werden. Über die Funkstrecke werden die Signale komprimiert übertragen. Eine Übertragung komrimierter Signale erfolgt wiederum allein zwischen Vermittlungsstellen der beteiligten Netze.

### Aufgabe der Erfindung

Der Erfindung liegt die Aufgabe zugrunde, ein Verfahren und ein Kommunikationssystem zur Übertragung von Daten eines Teilnehmeranschlusses zur Verfügung zu stellen, die die an den Betreiber eines Kommunikationsnetzes zu zahlenden Gebühren für Zuführungs- und Terminierungsleistungen (allgemein: Zusammenschaltungsleistungen) möglichst gering halten, und die es insbesondere ermöglichen, bei der Übertragung von Daten von Endgeräten eines Teilnehmeranschlusses über ein zweites Kommunikationsnetz unter Zwischenschaltung eines ersten Kommunikationsnetzes die an den Betreiber des ersten Kommunikationsnetzes zu zahlenden Gebühren möglichst gering zu halten.

### Zusammenfassung der Erfindung

Die Erfindung wird durch ein Verfahren mit den Merkmalen des Anspruchs 1, ein Kommunikationsnetz mit den Merkmalen des Anspruchs 12, eine Vorrichtung mit den Merkmalen des Anspruchs 13 und eine Interconnecteinheit mit den Merkmalen des Anspruchs 15 gelöst. Bevorzugt und vorteilhafte Ausgestaltungen der Erfindung sind in den Unteransprüchen angegeben.

Danach zeichnet sich die Erfindung dadurch aus, daß die Daten der einzelnen Nutzkanäle eines Teilnehmeranschlusses teilnehmerseitig durch Multiplexen auf eine verringerte Anzahl von Nutzkanälen verteilt werden, die zu übertragenden Daten über diese verringerte Anzahl von Nutzkanälen über das erste Kommunikationsnetz zu einem Interconnectpunkt des zweiten Kommunikationsnetzes übertragen werden und am oder hinter dem Interconnectpunkt durch Demultiplexen die ursprüngliche Anzahl der Nutzkanäle wieder hergestellt wird.

Durch die teilnehmerseitige Reduzierung der Nutzkanäle bei Durchleiten der Daten durch das erste Kommunikationsnetz, an dessen Betreiber Transitgebühren bzw. Zusammenschaltungsgebühren zu zahlen sind, verringern sich die an den Betreiber des ersten Kommunikationsnetzes zu zahlenden Gebühren. Nachdem die zu übertragenden Daten das erste Kommunikationsnetz passiert haben, werden sie wieder auf die ursprüngliche Anzahl von Nutzkanälen aufgespaltet und die Übertragung zu den jeweiligen gerufenen Einrichtungen erfolgt über das zweite Kommunikationsnetz in an sich bekannter Weise.

Natürlich kann das erfindungsgemäße Verfahren auch in der anderen Verbindungsrichtung verwendet werden, wobei am Interconnectpunkt durch Multiplexen und ggf. Datenkompression mehrere Nutzkanäle des zweiten Kommunikationsnetzes zusammengefaßt werden, die Daten über die verminderte Anzahl von Nutzkanälen über das erste Kommunikationsnetz zum gewünschten Teilnehmeranschluß übertragen werden und am Teilnehmeranschluß ein Demultiplexen und ggf. Dekomprimieren der Daten und eine Aufteilung auf die ursprüngliche Anzahl von Nutzkanälen erfolgt.

Unter "Daten" sind im Rahmen der Erfindung beliebige Daten zu verstehen, einschließlich Sprachdaten, Videodaten, Faxdaten und Daten eines Computers.

In der bevorzugten Ausführungsform der Erfindung werden die Daten der einzelnen Nutzkanäle am Teilnehmeranschluß zusätzlich komprimiert, so daß eine möglichst große Reduktion der Zahl der genutzten Nutzkanäle möglich ist. Für die Datenkompression und das Multiplexen der Daten kann auf an sich bekannte Verfahren und Einrichtungen zurückgegriffen werden. Gleiches gilt für das Demultiplexen und Dekomprimieren der Daten am Interconnectpunkt durch eine dort angeordnete geeignete Interconnecteinheit.

Bei dem Teilnehmeranschluß handelt es sich bevorzugt um einen ISDN-Anschluß, wobei die einzelnen Nutzkanäle ISDN-B-Kanäle mit einer Bandbreite von 64 kbit/s sind. Die digitalen Nutzkanäle werden beispielsweise durch eine Telekommunikationsanlage oder einen Least-Cost-Router auf eine verringerte Anzahl von Nutzkanälen mittels Multiplexing und Datenkompression reduziert. Bei einem ISDN-Basisanschluß können die zwei zur Verfügung stehenden Nutzkanäle zu einem Nutzkanal mit einer Bandbreite von 64 Kbit/s zusammengefaßt werden. Bei einem ISDN-Primärmultiplexanschluß werden die insgesamt dreißig zur Verfügung stehenden Nutzkanäle bevorzugt dynamisch und entsprechend dem Datenaufkommen zu einer möglichst geringen Anzahl von Nutzkanälen reduziert.

Die erfindungsgemäße Reduktion der Nutzkanäle kann des weiteren auch bei mehreren zur Verfügung stehenden ISDN-Basisanschlüssen vorgenommen werden (Sammelanschluß), an die Endgeräte eines Teilnehmeranschlusses angeschlossen sind. Dabei wird die Zahl von maximal 2n Nutzkanälen reduziert, wobei "n" für die Anzahl der Basisanschlüsse steht. An jedem Basisanschluß stehen zwei B-Kanäle zum Amt hin zur Verfügung.

Die Erfindung wird nachfolgend unter Bezugnahme auf die Figuren der Zeichnung anhand eines Ausführungsbeispieles näher erläutert. Es zeigen:
- Figur 1 -: ein erfindungsgemäßes Telekommunikationsnetz und
- Figur 2 -: schematisch die erfindungsgemäße Reduktion der Nutzkanäle in einem ersten Telekommunikationsnetz.

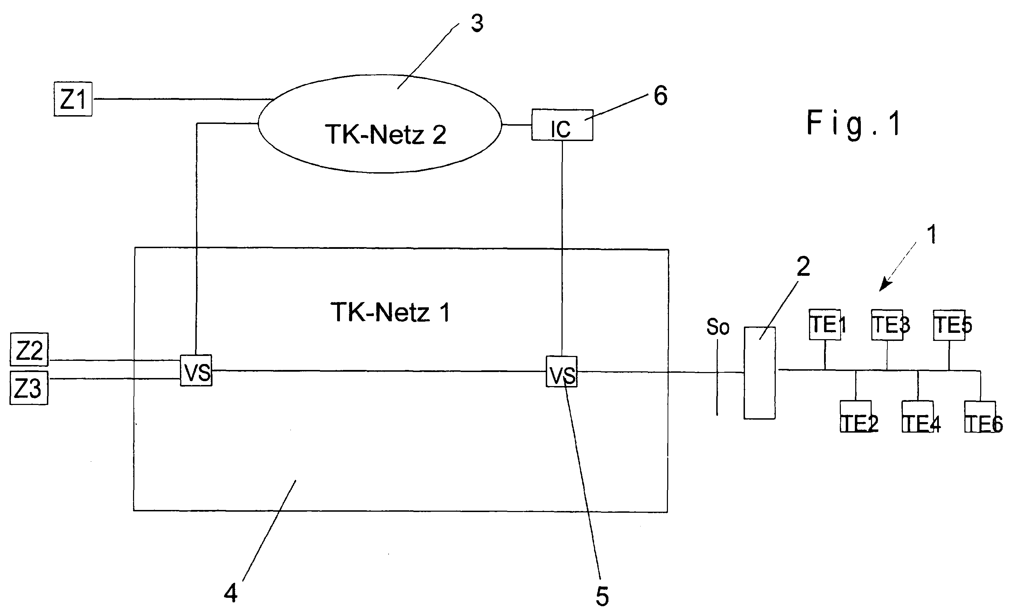

Figur 1 zeigt einen Teilnehmeranschluß 1, der aus mehreren Telekommunikations-Endeinrichtungen TE1 bis TE6 besteht, die über einen lokalen Bus an eine Telekommunikationsanlage 2 (TK-Anlage) angeschlossen sind. Bei den Telekommunikations-Endeinrichtungen handelt es sich beispielsweise um ein Telefon, ein Telefax oder einen Computer.

Die Telekommunikationsanlage 2 ist über einen ISDN-S₀-Anschluß oder über einen ISDN-S₂ₘ-Anschluß an das Vermittlungsnetz 4 angeschlossen. Dabei handelt es sich um einen ISDN-Basisanschluß bzw. einen ISDN-Primärmultiplexanschluß. Auch kann vorgesehen sein, daß ein Anschluß der Endgeräte über mehrere S₀-Basisanschlüsse erfolgt (Sammelanschluß), die gleichzeitig zur Verfügung stehen.

Alternativ handelt es sich bei dem Gerät 2 nicht um eine Telekommunikationsanlage, sondern um einen Least-Cost-Router, der dann die gleichen Aufgaben erfüllt wie nachfolgend in Bezug auf die Telekommunikationsanlage 2 beschrieben. Auch kann vorgesehen sein, daß zwischen dem Netzabschluß am Bezugspunkt S₀ und der Telekommunikationsanlage zusätzlich ein Least-Cost-Router angeordnet ist.

Von den Endeinrichtungen TE1 bis TE6 des Teilnehmeranschlusses 1 werden ständig Verbindungen zu verschiedenen Zieleinrichtungen Z1, Z2, Z3 ... aufgebaut, die in Fig. 1 schematisch dargestellt sind und bei denen es sich wiederum etwa um ein Telefon, ein Telefax oder einen Computer handelt. Die Verbindungen sollen dabei über ein zweites Telekommunikationsnetz 3 (TK-Netz 2) eines privaten Anbieters unter Zwischenschaltung eines ersten Telekommunikationsnetzes 4 (TK-Netz 1) zur Verfügung gestellt werden.

Hierzu werden die zu übertragenden Daten zunächst vom Teilnehmeranschluß 1 an die lokale Teilnehmervermittlungsstelle VS 5 des ersten Telekommunikationsnetzes 4 übersandt und von dieser an ein Einwählsystem 6 alias Interconnectpunkt IC 6 weitergeleitet. Der Interconnectpunkt 6 stellt einen Netzübergang zwischen dem ersten Netz 4 und dem zweiten Netz 3 zur Verfügung. Ein Verbindungswunsch wird über die Vermittlungsstelle 5 und den Interconnectpunkt 6 über das zweite TK-Netz 3 an die jeweils gerufene Zieleinrichtung Z1 etc. gesandt, wobei gegebenenfalls erneut ein Übergang zum ersten Kommunikationsnetz 4 erfolgt, um die "Last-Mile" zur gerufenen Zieleinrichtung zu überbrücken.

Für jeden Nutzkanal muß der Betreiber des zweiten TK-Netzes 3 Durchleitungsgebühren an den Betreiber des ersten TK-Netzes 4 zahlen.

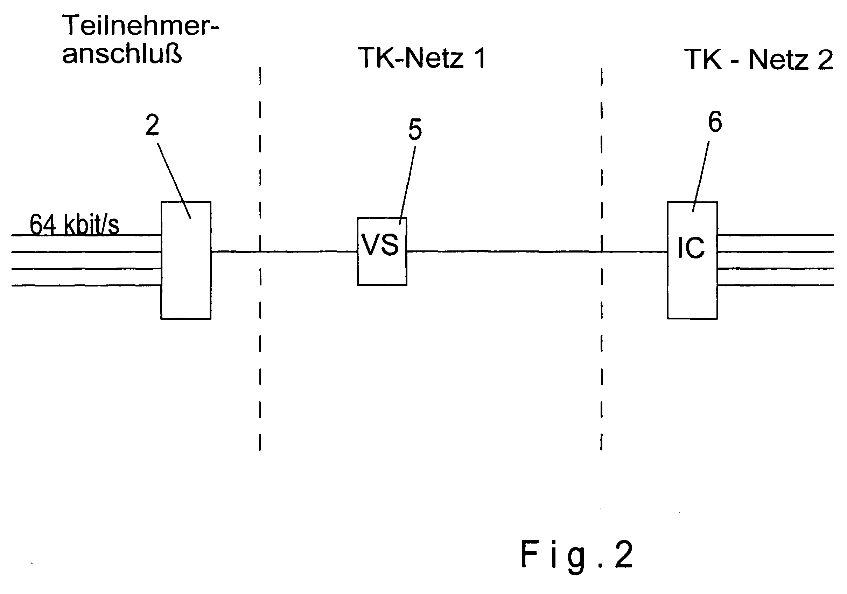

Erfindungsgemäß sind in die TK-Anlage 2 (bzw. einen Least-Cost-Router) eine Multiplexeinheit und eine Datenkompressionseinheit integriert. Diese komprimieren die Daten der einzelnen Nutzkanäle des Teilnehmeranschlusses 1 und verteilen die zu übertragenden Daten der einzelnen Nutzkanäle auf eine verringerte Anzahl von Nutzkanälen. Dies ist in Figur 2 schematisch dargestellt. Die Reduktion der Anzahl der Nutzkanäle erfolgt dabei teilnehmerseitig, also vor der Netzabschlußeinheit (NT) des ersten TK-Netzes.

Beispielsweise handelt es sich bei dem Teilnehmeranschluß 1 um einen ISDN-Primärmultiplexanschluß mit dreißig zur Verfügung stehenden Nutzkanälen. Wenn etwa vier Nutzkanäle belegt sind, das heißt beispielsweise vier der an die TK-Anlage 2 angeschlossenen Endgeräte jeweils einen Nutzkanal (B-Kanal) belegen, so werden die Daten dieser vier Nutzkanäle durch Datenkompression und Multiplexing auf beispielsweise nur einen Nutzkanal gegeben. Der Grad der Reduktion der Nutzkanäle hängt naturgemäß davon ab, wie stark die einzelnen Nutzkanäle mit Daten belegt sind und wie groß die Möglichkeiten zur Datenkompression sind. Der Grad der Reduktion der Nutzkanäle wird bevorzugt dynamisch durch eine Steuereinheit festgelegt. Alternativ kann auch eine statische Reduktion mit einer festen Reduktionsrate vorgenommen werden.

Die Multiplexeinheit ist beispielsweise ein statistischer Multiplexer. Für die Datenkompression wird auf bekannte Kompressionstechniken zurückgegriffen.

Auch ist es möglich, daß es sich bei dem Teilnehmeranschluß um einen ISDN-Basisanschluß mit lediglich zwei Nutzkanälen handelt. Dann werden die Daten dieser beiden Nutzkanäle durch Multiplexing und Datenkompression auf nur einen Nutzkanal verteilt. In jedem Falle findet erfindungsgemäß eine Reduktion der Anzahl der Nutzkanäle statt.

Die nun auf eine geringere Anzahl von Nutzkanälen verteilten, zu übertragenden Daten werden über das erste Telekommunikationsnetz 4 bzw. dessen Vermittlungsstelle 5 zum Interconnectpunkt 6 zum zweiten Telekommunikationsnetz 3 übertragen. Aufgrund der Reduktion der Anzahl der Nutzkanäle sind dabei geringere Gebühren für das Durchleiten der Daten und die Anzahl der zur Verfügung gestellten Anschlüsse an den Betreiber des ersten Telekommunikationsnetzes 4 zu zahlen.

Am Interconnectpunkt 6 oder dahinter werden die empfangenen Daten des Teilnehmeranschlusses 1 dekomprimiert und demultiplext und wieder auf die ursprüngliche Anzahl von Nutzkanälen verteilt. Es erfolgt dann in an sich bekannter Weise eine Übertragung der Daten über das zweite Telekommunikationsnetz 3 an die jeweilige Zieleinrichtung.

Am Interconnectpunkt 6 ist eine Interconnecteinheit vorgesehen, die Mittel zum Dekomprimieren und Mittel zum Demultiplexen aufweist. Damit die Interconnecteinheit weiß, wie die ankommenden Daten des Teilnehmeranschlusses auf die ursprüngliche Anzahl der Nutzkanäle zu verteilen sind, sendet die TK-Anlage 2 Signalisierungsinformationen an den Interconnectpunkt 6. Diese enthalten insbesondere Informationen über die erfolgte Reduktion der Nutzkanäle sowie - sofern dies nicht festgelegt ist - Informationen über das verwendete Datenkompressionsverfahren und das verwendete Multiplexverfahren. Diese Informationen können als Inband- oder Außenbandsignal zur Interconnecteinheit 6 übertragen werden.

Beispielsweise werden die Signalisierungsinformationen als Inbandsignal über einen der verbleibenden Nutzkanäle übersandt. Hierzu ist es denkbar, der Interconnecteinheit 6 zunächst durch eine bestimmte Bitfolge mitzuteilen, daß nun Signalisierungsinformationen folgen, und dann die Signalisierungsinformationen an diese Bitfolge anzuschließen. Selbstverständlich kann die Signalisierungsinformation auch als Außenbandsignal, etwa in einem ISDN-Setup-Protokolldatenelement an den Interconnectpunkt 6 übertragen werden. Für den Fachmann ist offensichtlich, daß es mehrere Möglichkeiten einer geeigneten Signalisierung gibt.

Bei einer Verbindungsrichtung vom Interconnectpoint zum Teilnehmeranschluß kann das beschriebene Verfahren in analoger Weise eingesetzt werden, wobei die Zahl der Nutzkanäle des zweiten Kommunikationsnetzes am Interconnectpunkt in Richtung des ersten Netzes reduziert wird und Daten über die in ihrer Zahl reduzierten Nutzkanäle über das erste Kommunikationsnetz zum Teilnehmeranschluß gesendet werden.

Es wird darauf hingewiesen, daß die Erfindung vorstehend in Bezug auf digitale ISDN-Netze beschrieben wurde. Es ist jedoch bei grundsätzlich gleichem Verfahren ebenso möglich, die Erfindung bei analogen Teilnehmeranschlüssen zu verwirklichen.

Die Erfindung beschränkt sich in ihrer Ausführung nicht auf das vorstehend beschriebene Ausführungsbeispiel. Wesentlich für die Erfindung ist allein, daß teilnehmerseitig eine Reduktion der Anzahl der Nutzdatenkanäle erfolgt, zu übertragende Daten über diese verringerte Anzahl von Nutzkanälen über ein erstes Kommunikationsnetz zu einem Interconnectpunkt eines zweiten Kommunikationsnetzes übertragen werden, am Interconnectpunkt die zu übertragenden Daten wieder auf die ursprüngliche Anzahl von Nutzkanälen verteilt und über das zweite Kommunikationsnetz in üblicher Weise an die jeweilige Zieleinrichtung übertragen werden (vgl. auch Figur 2).

## Patentansprüche

1. Verfahren zur Übertragung von Daten eines Teilnehmeranschlusses, an den mindestens ein Endgerät angeschlossen ist, zu mindestens einer Zieleinrichtung, wobei die Daten zunächst über ein erstes Kommunikationsnetz übertragen werden, an das der Teilnehmeranschluß angeschlossen ist, und von diesem an ein zweites Kommunikationsnetz weitergegeben werden, das mit dem ersten Telekommunikationsnetz zusammengeschaltet ist (Interconnection),
**dadurch gekennzeichnet,** daß
a) die Daten der einzelnen Nutzkanäle des Teilnehmeranschlusses (1) teilnehmerseitig durch Multiplexen auf eine verringerte Anzahl von Nutzkanälen verteilt,
b) die zu übertragenden Daten auf den verbleibenden Nutzkanälen über das erste Kommunikationsnetz (4) zu einem Interconnectpunkt (6) des zweiten Kommunikationsnetzes (3) übertragen werden,
c) am oder hinter dem Interconnectpunkt (6) durch Demultiplexen die ursprüngliche Anzahl der Nutzkanäle wiederhergestellt wird und
d) die Daten auf den jeweiligen Nutzkanälen über das zweite Kommunikationsnetz (3) und ggf. weitere Kommunikationsnetze zur jeweiligen Zieleinrichtung (Z1, Z2, Z3) übertragen werden.

2. Verfahren nach Anspruch 2, **dadurch gekennzeichnet,** daß die Daten der einzelnen Nutzkanäle zwecks einer möglichst großen Reduktion der genutzten Nutzkanäle zusätzlich komprimiert werden und dementsprechend am oder hinter dem Interconnectpunkt (6) des zweiten Kommunikationsnetzes neben einem Demultiplexen auch ein Dekomprimieren der Daten stattfindet.

3. Verfahren nach Anspruch 2 oder 3, **dadurch gekennzeichnet,** daß eine teilnehmerseitige Reduktion der Nutzkanäle durch eine Netzübergangseinrichtung, insbesondere eine TK-Anlage (2) erfolgt, an die die einzelnen Endgeräte (TE1-TE6) angeschlossen sind und die zwischen die Endgeräte und die Netzabschlußeinheit des Teilnehmeranschlusses (1) geschaltet ist.

4. Verfahren nach Anspruch 2 oder 3, **dadurch gekennzeichnet,** daß eine teilnehmerseitige Reduktion der Nutzkanäle durch einen Least-Cost-Router erfolgt, an den die einzelnen Endgeräte und/oder eine TK-Anlage angeschlossen sind und der der Netzabschlußeinheit des Teilnehmeranschlusses vorgeschaltet ist.

5. Verfahren nach mindestens einem der vorangehenden Ansprüche, **dadurch gekennzeichnet,** daß Informationen betreffend die erfolgte Reduktion der Nutzkanäle und/oder das verwendete Multiplexverfahren und/oder das verwendete Komprimierverfahren als Inband- oder Außenbandsignal einer Interconnecteinheit des zweiten Kommunikationsnetzes signalisiert werden.

6. Verfahren nach mindestens einem der vorangehenden Ansprüche, **dadurch gekennzeichnet,** daß zum Multiplexen ein statistischer Multiplexer verwendet wird.

7. Verfahren nach mindestens einem der vorangehenden Ansprüche, **dadurch gekennzeichnet,** daß die Zahl der verbleibenden Nutzkanäle dynamisch an die Zahl der am Teilnehmeranschluß jeweils zur Datenübertragung genutzten Nutzkanäle angepaßt wird.

8. Verfahren nach mindestens einem der Ansprüche 1 bis 6, **dadurch gekennzeichnet,** daß eine Reduktion der Nutzkanäle mit einer festen Reduktionsrate vorgenommen wird.

9. Verfahren nach mindestens einem der vorangehenden Ansprüche, **dadurch gekennzeichnet,** daß die Nutzkanäle ISDN-B-Kanäle sind und teilnehmerseitig durch Datenkomprimierung und Multiplexing die Anzahl der B-Kanäle reduziert wird.

10. Verfahren entsprechend mindestens einem der vorangehenden Ansprüche, bei dem eine Reduktion der Nutzkanäle bei einer Verbindung vom Interconnectpoint zum Teilnehmeranschluß erfolgt, **dadurch gekennzeichnet,** daß
a) die Daten mehrerer Nutzkanäle des zweiten Kommunikationsnetzes (3) durch Multiplexen auf eine verringerte Anzahl von Nutzkanälen verteilt,
b) die zu übertragenden Daten auf den verbleibenden Nutzkanälen über das erste Kommunikationsnetz (4) zu einem Teilnehmeranschluß (1) übertragen werden und
c) am Teilnehmeranschluß durch Demultiplexen die ursprüngliche Anzahl der Nutzkanäle wiederhergestellt wird und die Daten auf den Nutzkanälen an die jeweiligen Endgeräte des Teilnehmeranschlusses übertragen werden.

11. Verfahren nach Anspruch 10, **dadurch gekennzeichnet,** daß die Daten der einzelnen Nutzkanäle zusätzlich komprimiert werden.

12. Kommunikationssystem bestehend aus mindestens einem ersten und einem zweiten Kommunikationsnetz, die zusammengeschlossen sind (Interconnection), wobei das erste Kommunikationsnetz eine Vielzahl von Teilnehmeranschlüssen aufweist und an jeden Teilnehmeranschluß mindestens ein Endgerät angeschlossen ist,
**dadurch gekennzeichnet,** daß
an den Teilnehmeranschlüssen Multiplexeinrichtungen vorgesehen sind, die die Nutzkanäle eines Teilnehmeranschlusses reduzieren, so daß eine Datenübertragung über das erste Kommunikationsnetz (4) über eine reduzierte Zahl von Nutzkanälen erfolgt, und den Interconnectpunkten (6) des zweiten Kommunikationsnetzes (3) Demultiplexeinrichtungen zugeordnet sind, die die Nutzkanäle eines Teilnehmeranschlusses wieder auf die ursprüngliche Zahl aufspalten.

13. Vorrichtung zur Durchführung des Verfahrens nach Anspruch 1,
**gekennzeichnet durch**
einen Multiplexer, der die Daten mehrerer Nutzkanäle eines Telekommunikationsanschlusses multiplext und auf eine verringerte Anzahl von Nutzkanälen legt.

14. Vorrichtung nach Anspruch 13, **dadurch gekennzeichnet,** daß zusätzlich Mittel zur Datenkomprimierung vorgesehen sind.

15. Interconnecteinheit zur Durchführung des Verfahrens nach Anspruch 1,
**gekennzeichnet durch**
einen Demultiplexer, der die Daten der Nutzkanäle, die über ein erstes Kommunikationsnetz ankommen, dekomprimiert und auf eine höhere Zahl von Nutzkanälen eines zweiten Kommunikationsnetzes legt.

16. Vorrichtung nach Anspruch 15, **dadurch gekennzeichnet,** daß zusätzlich Mittel zum Dekomprimieren von Daten vor gesehen sind.
